# EUROPEAN PATENT SPECIFICATION

(11) **EP 2 015 025 B1**
(45) Date of publication and mention of the grant of the patent: **25.04.2012**
(21) Application number: 08252090.9
(22) Date of filing: 18.06.2008
(51) Int. Cl.: G01C 21/32

(54) **Map data distribution system and map data updating method**
Kartendatenverteilungssystem und Kartendatenaktualisierungsverfahren
Système de distribution de données de carte et procédé de mise à jour de données de carte

(30) Priority: 11.07.2007 JP 2007182018
(43) Date of publication of application: 14.01.2009
(73) Proprietor: Hitachi Ltd., Chiyoda-ku Tokyo 100-8280 (JP)
(72) Inventor: Asahara, Akinori, c/o Hitachi, Ltd., Tokyo 100-8220 (JP); Morioka, Michio, c/o Hitachi, Ltd., Tokyo 100-8220 (JP); Inayoshi, Hirokazu, c/o Hitachi, Ltd., Tokyo 100-8220 (JP); Naka, Kenji, c/o Hitachi, Ltd., Tokyo 100-8220 (JP); Tanabata,Takanari, c/o Hitachi, Ltd., Tokyo 100-8220 (JP)
(74) Representative: Calderbank, Thomas Roger

(56) References cited:
- EP-A2- 1 657 526
- JP-A- 2005 338 687

## Description

The present invention relates to a technique of updating map data stored in a mobile terminal.

In navigation systems, in a case where a part of map data stored in a server is updated, when only the part of the map data is updated in a mobile terminal, a navigation function may not be properly performed. For example, when a new road is constructed in an update target area, the road included in the area, whose map data has been updated, may not be connected to roads included in areas which are contiguous to the update target area and whose map data has not been updated. To address this problem, JP-A-2004-177245 discloses a technique which ensures road connectivity by expanding, along the changed road, the update target area to include areas in which the road is connected to existing roads.

Further, if changed information is reflected in map data of the whole country, a long processing time is required and the map data cannot be used while update processing is being performed. JP-A-2006-220524 discloses a technique in which map data of a required area is updated when necessary and only a changed part in the map is updated. When the technique disclosed in JP-A-2006-220524 is used, it is ensured that the map data of at least the required area has been updated even if map data of the whole country has not been updated, so that navigation can be properly performed.

According to the technique disclosed in
JP-A-2004-177245, road connectivity can be ensured even when a limited area is updated, by expanding the update target area such that road connectivity can be maintained. However, since areas included in the expanded update target area must be updated at the same time, a long processing time is required to handle the wide update target area. Since map data cannot be referred to while update processing is being performed, the map data cannot be referred to for a long time.

Further, according to the technique disclosed in
JP-A-2006-220524, since map data is updated when necessary, the map data can be referred to even while update processing is being performed. However, it is necessary to create a file for each area, which is a unit for updating. If map data of Japan is divided, for example, in units of several kilometers, several tens of thousands of files need to be managed and a large load is imposed when the map data is referred to.

In order to solve the problem inherent to the technique disclosed in JP-A-2006-220524, a method using a database management system (hereinafter, referred to as "DBMS") is generally used. However, index information (indexes) used to search files for specific area data is required to quickly refer to the map data using DBMS. If the update target area is wide, a long time is required to update the indexes, and, as a result, the map data cannot be referred to for a long time.

An example of a method of delivering difference map data can be formed in EP 1657526. An example of a system providing updates for the requested area and for additional areas connected to the first area with predetermined criteria can be found in JP 2005/338687.

In view of the above-mentioned circumstances, the present invention has been made, and therefore, it is preferable for' the present invention to allow, in a map data distribution system using DBMS, the use of map data even when a long processing time is required to create indexes.

According to a typical aspect of the present invention, there is provided a map data distribution system including: a data distribution server which distributes map data; and a terminal which receives the map data, the data distribution server including a difference data database for storing, when the map data is updated, difference data between map data before updated and updated map data, for each area, and the terminal including: a database for storing the map data distributed from the map distribution server; and an updated-data store part for storing the updated map data until the updated map data is reflected in the database, wherein: when a request for map data of an updated target area is received from the terminal, the data distribution server sends difference data for the updated target area from the difference data database to the terminal; the terminal generates updated data by applying the difference data sent from the data distribution server to the map data stored in the database; the terminal writes the generated updated data in the updated-data store part; the terminal writes the updated data stored in the updated-data store part, in the database; when a request to fetch the map data is received from an application which uses the map data while the updated data stored in the updated-data store part is being written in the database, the terminal determines whether the fetch-requested map data has been stored in the updated-data store part; when the fetch-requested map data has been stored in the updated-data store part, the terminal fetches the fetch-requested map data from the updated-data store part; and when the fetch-requested map data has not been stored in the updated-data store part, the terminal fetches the fetch-requested map data from the database.

According to an aspect of the present invention, even while map data stored in a database is being updated, the map data can be used.

### IN THE DRAWINGS

FIG. 1 is a system configuration diagram of a map data distribution system according to a first embodiment of the present invention;
FIG. 2 is a diagram of programs and data included in the map data distribution system according to the first embodiment of the present invention;
FIG. 3 is a diagram showing an area data table which stores map data, according to the first embodiment of the present invention;
FIG. 4A is a diagram showing map data version 1 according to the first embodiment of the present invention;
FIG. 4B is a diagram showing map data version 2 according to the first embodiment of the present invention;
FIG. 4C is a diagram showing map data obtained after one of areas is updated in the first embodiment of the present invention;
FIG. 5 is a diagram showing an area-based map update data management table according to the first embodiment of the present invention;
FIG. 6 is a diagram showing an overview of a procedure to update map data stored in a terminal, according to the first embodiment of the present invention;
FIG. 7 is a diagram showing a data structure of an updated-data store part according to the first embodiment of the present invention;
FIG. 8 is a flowchart showing the entire procedure of update processing for map data stored in the terminal, according to the first embodiment of the present invention;
FIG. 9 is a diagram showing a data update state in each process of map data update processing according to the first embodiment of the present invention;
FIG. 10 is a diagram showing an example data structure of difference data according to the first embodiment of the present invention;
FIG. 11 is a diagram showing a procedure of an updated-data generating process according to the first embodiment of the present invention;
FIG. 12 is a diagram showing a data flow in an updated-data transferring process according to the first embodiment of the present invention;
FIG. 13 is a diagram showing a procedure of the updated-data transferring process according to the first embodiment of the present invention;
FIG. 14 is a diagram of a data flow in a process where an application requests for map data in the first embodiment of the present invention;
FIG. 15 is a diagram of a data flow in a process of fetching requested map data and sending the map data to an application, in the first embodiment of the present invention;
FIG. 16 is a diagram of an application-requesting-data searching process according to the first embodiment of the present invention;
FIG. 17 is a diagram of a process performed when map data is updated in the first embodiment of the present invention;
FIG. 18 is a diagram of the processes in the procedure and corresponding screen transitions according to the first embodiment of the present invention;
FIG. 19 is a diagram showing example tables stored in a database according to a second embodiment of the present invention;
FIG. 20 is a flowchart showing a procedure of an application-requesting-data searching process according to the second embodiment of the present invention;
FIG. 21 is a diagram showing an example node data table and an example link data table according to a third embodiment of the present invention; and
FIG. 22 is a diagram showing tables for storing updated data, according to the third embodiment of the present invention.

### First Embodiment

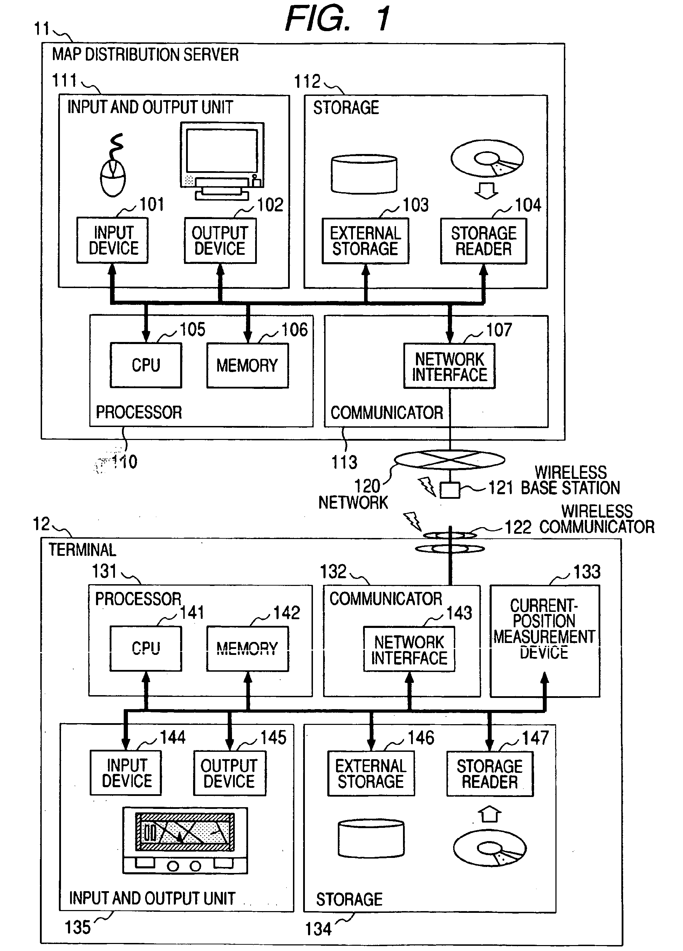

FIG. 1 is a system configuration diagram of a map data distribution system according to a first embodiment of the present invention.

The map data distribution system according to the first embodiment of the present invention includes a map distribution server 11 and a terminal 12. The map distribution server 11 and the terminal 12 are connected to each other via a network 120. The map distribution server 11 distributes map data to the terminal 12. The terminal 12 receives and stores the distributed map data. The terminal 12 displays map information by using the map data stored therein and performs a navigation function according to an instruction of a user.

The map distribution server 11 includes a processor 110, an input and output unit 111, a storage 112, and a communicator 113.

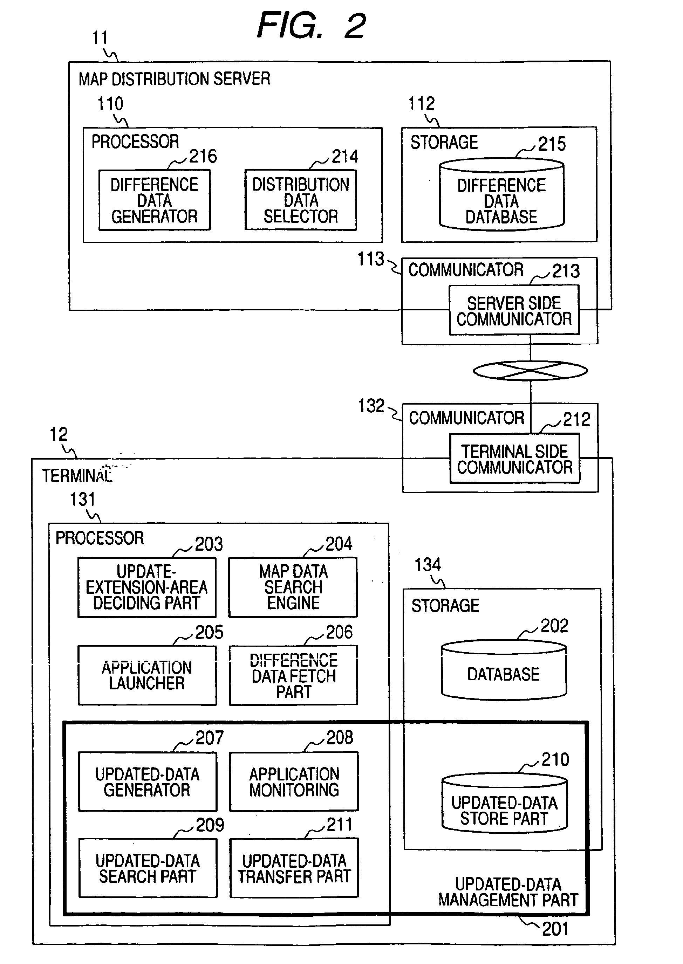

The processor 110 includes a CPU 105 and a memory 106. The CPU 105 executes a program stored in the memory 106 to perform a predetermined process. The memory 106 stores programs to be executed by the CPU 105 and data required to execute the programs. The memory 106 may be either a volatile memory or a nonvolatile memory. Note that the programs and the data stored in the memory 106 will be described later in detail with reference to FIG. 2.

The input and output unit 111 includes an input device 101 and an output device 102. The input device 101 is used to input information necessary to manage the map distribution server 11. The input device 101 is a keyboard, for example. The output device 102 displays management information for the map distribution server 11. The output device 102 is a display unit, for example.

The storage 112 includes an external storage 103 and a storage reader 104. The external storage 103 stores map data to be distributed by the map distribution server 11. The external storage 103 is, for example, a magnetic disk device or a flash memory. The storage reader 104 reads information stored in a storage medium such as a DVD. Note that data stored in the storage 112 will be described later in detail with reference to FIG. 2.

The communicator 113 includes a network interface 107. The map distribution server 11 is connected to the network 120 via the network interface 107.

The CPU 105, the memory 106, the input device 101, the output device 102, the external storage 103, the storage reader 104, and the network interface 107 are connected to one another via an internal bus.

The network 120 includes a wireless base station 121 and is connected to the terminal 12, which includes a wireless communicator 122.

The terminal 12 further includes a processor 131, a communicator 132, a current-position measurement device 133, a storage 134, and an input and output unit 135.

The processor 131 includes a CPU 141 and a memory 142. The CPU 141 executes a program stored in the memory 142 to perform a predetermined process. The memory 142 stores programs to be executed by the CPU 141 and data required to execute the programs. The memory 142 may be either a volatile memory or a nonvolatile memory. Note that the programs and the data stored in the memory 142 will be described later in detail with reference to FIG. 2.

The communicator 132 includes a network interface 143 and the wireless communicator 122. The network interface 143 is connected to the network 120 via the wireless communicator 122.

The current-position measurement device 133 measures the current position of the terminal 12. Specifically, the current position of the terminal 12 is measured by using the global positioning system (GPS) or the like.

The storage 134 includes an external storage 146 and a storage reader 147. The external storage 146 stores map data. The external storage 146 is, for example, a magnetic disk device. The storage reader 147 reads information stored in a storage medium such as a DVD. Note that data stored in the storage 134 will be described later in detail with reference to FIG. 2.

The input and output unit 135 includes an input device 144 and an output device 145. The input device 144 is used to input necessary information and to operate the terminal 12, for example, to activate the navigation system. The input device 144 is a touch panel, for example. The output device 145 displays map information around the current position or a destination. The output device 145 is an LCD display unit, for example. Further, the output device 145 may also output information by sound.

The CPU 141, the memory 142, the input device 144, the output device 145, the external storage 146, the storage reader 147, the network interface 143, and the current-position measurement device 133 are connected to one another via an internal bus.

FIG. 2 is a diagram of programs and data included in the map data distribution system according to the first embodiment of the present invention.

The processor 110 of the map distribution server 11 includes a difference data generator 216 and a distribution data selector 214. The difference data generator 216 and the distribution data selector 214 are stored in the memory 106 included in the processor 110. The difference data generator 216 and the distribution data selector 214 are programs to be executed by the CPU 105.

The storage 112 of the map distribution server 11 includes a difference data database 215. The difference data database 215 is stored in the external storage 103 of the storage 112.

The CPU 105 executes the difference data generator 216 to extract difference data between the latest map data and the map data before updated, and stores the difference data in the difference data database 215. Data to be stored is change information, such as the addition of a new road, a change in speed limit, or the addition of a new shop. The CPU 105 executes the distribution data selector 214 to select and distribute the stored data in response to a request sent from the terminal 12. Note that, since the difference data database 215 includes the initial map data, the difference data can be generated by using only information stored in the difference data database 215.

The map distribution server 11 includes a server-side communicator 213 in the communicator 113. The above-mentioned stored difference data is distributed to the terminal 12 via the server-side communicator 213 through the network 120.

The terminal 12 includes a terminal-side communicator 212 in the communicator 132. The terminal 12 receives the difference data distributed by the map distribution server 11, via the terminal-side communicator 212, and stores the difference data in the external storage 146.

The processor 131 of the terminal 12 includes an update-extension-area deciding part 203, a map data search engine 204, an application launcher 205, a difference data fetch part 206, an updated-data generator 207, an application monitoring part 208, an updated-data search part 209, and an updated-data transfer part 211. The update-extension-area deciding part 203, the map data search engine 204, the application launcher 205, the difference data fetch part 206, the updated-data generator 207, the application monitoring part 208, the updated-data search part 209, and the updated-data transfer part 211 are programs stored in the memory 142 of the processor 131.

The storage 134 of the terminal 12 includes a database 202 and an updated-data store part 210.

The database 202 stores map data. The database 202 is stored in the external storage 146 of the storage 134.

The updated-data store part 210 temporarily stores updated data which is generated by applying the difference data distributed by the map distribution server 11 to the map data stored in the database 202. Specifically, the generated updated data is stored in the updated-data store part 210 until the updated data is stored in the database 202. The updated-data store part 210 may be included in the external storage 146. Alternatively, the updated-data store part 210 may be included in the memory 142 of the processor 131 when the generated updated data has a small size or when the memory 142 has a large capacity.

The update-extension-area deciding part 203 decides an update-extension-area which is an area to be updated based on the distributed difference data. The map data search engine 204 searches for map data according to an instruction of the user. The application launcher 205 displays requested map data or performs the navigation function such as route guidance, according to an instruction of the user. The difference data fetch part 206 obtains difference data from the map distribution server 11.

The updated-data generator 207, the application monitoring part 208, the updated-data search part 209, the updated-data store part 210, and the updated-data transfer part 211 constitute an updated-data management part 201. The updated-data management part 201 updates map data stored in the database 202 based on difference data distributed by the map distribution server 11.

The updated-data generator 207 generates updated map data based on the map data stored in the database 202 and the distributed difference data. The application monitoring part 208 monitors an application execution state. The updated-data search part 209 searches for requested updated map data. The updated-data transfer part 211 stores updated map data in the database 202.

Road data included in the map data is stored in a network data structure which includes a link corresponding to a road and a node corresponding to an intersection. Each link and each node have unique identifiers.

Map data is divided, for example, into rectangle regions and an identifier is assigned to each of the regions. In the map data distribution system of the first embodiment of the present invention, map data can be updated for each region. Hereinafter, a region obtained through division is referred to as an area, and an identifier of each area is referred to as an area ID. Note that an area may have a polygonal shape or a circular shape instead of a rectangle shape. Further, when change information for an area is received from the map distribution server 11, the area shape can be changed even after the system starts operating.

In the first embodiment of the present invention, the map can be divided into areas having a desired size such that the map is updated in a suitable manner for the intended purpose. For example, it is possible to update only an area that includes the current position or to update only areas that include the route.

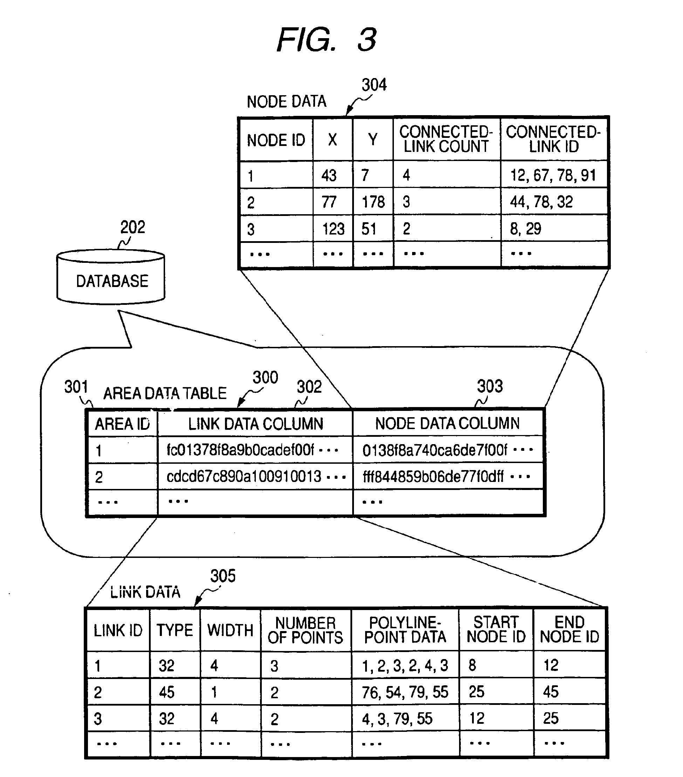

FIG. 3 is a diagram showing an area data table 300 which stores map data, according to the first embodiment of the present invention. The area data table 300 stores, for each area, data on roads and intersections. The area data table 300 is stored in the database 202. Map data stored in the map distribution server 11 has also the same table structure.

The area data table 300 includes an area ID 301, a link data column 302, and a node data column 303. The area ID 301 stores an identifier for identifying an area. The link data column 302 stores link data corresponding to a road. The node data column 303 stores node data corresponding to an intersection or to a point at which the road type is changed.

The link data column 302 stores one or more pieces of information of link data 305 in a binary format. The link data 305 includes information on a link ID, the road type, the width of road, the number of points, polyline-point data, a start node ID, and an end node ID. Since binary data generated by collecting multiple pieces of data is recorded in one column, pieces of data accessed simultaneously at high possibility can be read at the same time.

The link ID stores an identifier for identifying a link. The road type stores the type of a road, such as an expressway. The width of road stores the width of a road. The number of points, the polyline-point data, the start node ID, and the end node ID store information for identifying the shape of a link and the connection state.

The node data column 303 stores node data 304 in a binary format, as in the link data column 302. The node data 304 includes a node ID, a coordinate x, a coordinate y, a connected-link count, and a connected-link ID.

The node ID stores an identifier for identifying a node. The coordinate x and the coordinate y store the coordinates of the position of the node. The connected-link count and the connected-link ID store information of the links connected to the node.

Note that, when plural roads (links) include a common node ID, this indicates that the roads are connected. Based on road connection states, a route from the current position to a destination can be searched for by using a known route finding method such as the Dijkstra method.

When the user requests to update the map of a specified area via the input and output unit 135, the terminal 12 requests, via the network 120, the map distribution server 11 to send the difference data required to update the map of the specified area. Hereinafter, an area corresponding to map data to be updated is referred to as an update target area. The terminal 12 reads the difference data, obtained from the map distribution server 11, and updates the map data stored in the database 202 based on the update information on roads and intersections included in the obtained difference data.

When the map data is updated for each area, if roads which are actually connected are not connected in the map data even when the roads are located in a range that is not specified by the user, the terminal 12 cannot properly perform the navigation function. Further, different pieces of map data of an identical road, which are obtained before and after change, should be prevented from being stored. Furthermore, it is preferred that the map data be updated such that a road which goes to the outside of an update target area is connected at least to the road outside the update target area.

In order to solve the above-mentioned problems, the map distribution server 11 distributes difference data to prevent a road passing through areas from being disconnected.

In the map data distribution system of the first embodiment of the present invention, map data is periodically updated, and the map data to be updated satisfies two conditions described below. In a first condition, the link ID of a road and the node ID of an intersection that are actually not changed are unchanged among different versions. With the first condition, the difference between pieces of road data can be properly obtained. In a second condition, a road in one area continues in another area in the map data of all areas if the road actually continues. Accordingly, when route search is performed in the map data of one area, at least one route is found. A sequential number assigned to map data periodically updated is used as a version number. Note that map data having a larger version number is updated more recently.

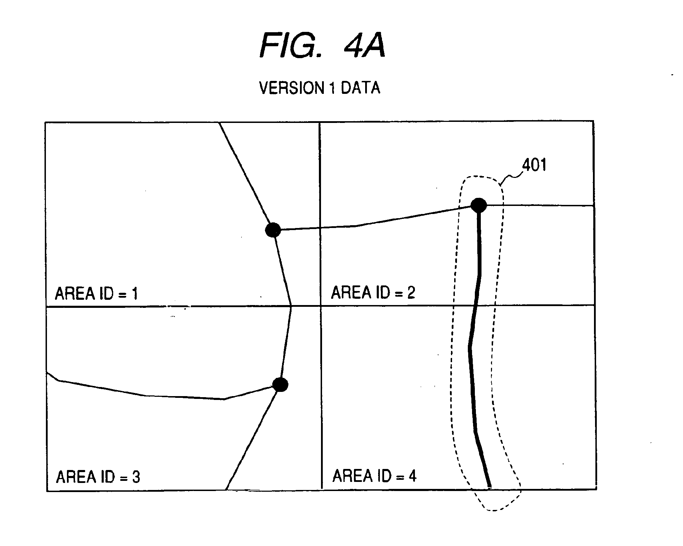

An outline of a procedure to update map data for each area will be described with reference to FIGS. 4A to 4C.

FIG. 4A is a diagram showing map data version 1 according to the first embodiment of the present invention. The map data version 1 is the original map data.

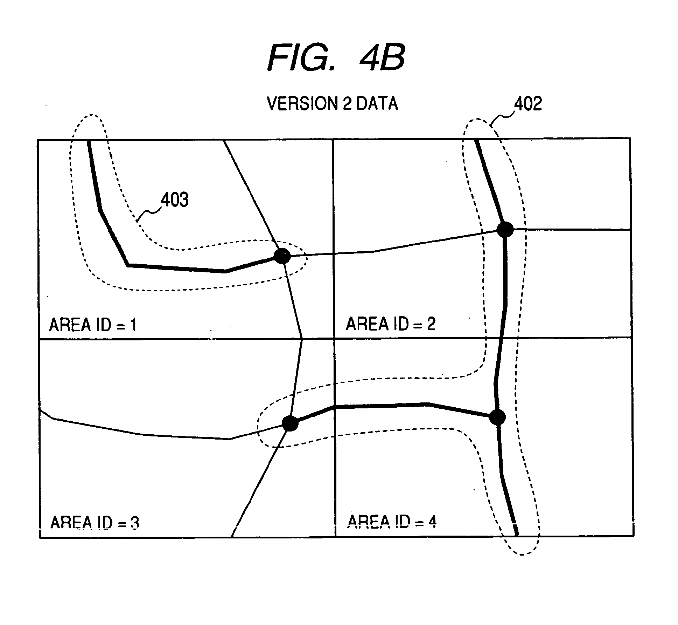

FIG. 4B is a diagram showing map data version 2 according to the first embodiment of the present invention. The map data version 2 is the latest map data.

When the map data version 1 is compared with the map data version 2, it is found that a link 401 included in the map data version 1 is deleted and links 402 and 403 are added, in the map data version 2. Therefore, the difference data indicates the deletion of the link 401 and the addition of the links 402 and 403.

Map update data is generated from the difference data by collecting data of connected links which have been added, deleted, or changed. For example, first map update data indicates the addition of the link 403. Further, second map update data indicates the deletion of the link 401 and the addition of the link 402.

In the first embodiment of the present invention, when the map data of an update target area is updated, road connectivity can be ensured by applying the map update data corresponding to the update target area to the map data before updated.

It is assumed that the map data version 1 is currently stored in the database 202 included in the terminal 12. Further, it is assumed that the map data version 2, which is the latest map data, is stored in the map distribution server 11. A description will be given to a case where an area having area ID 4 is an update target area.

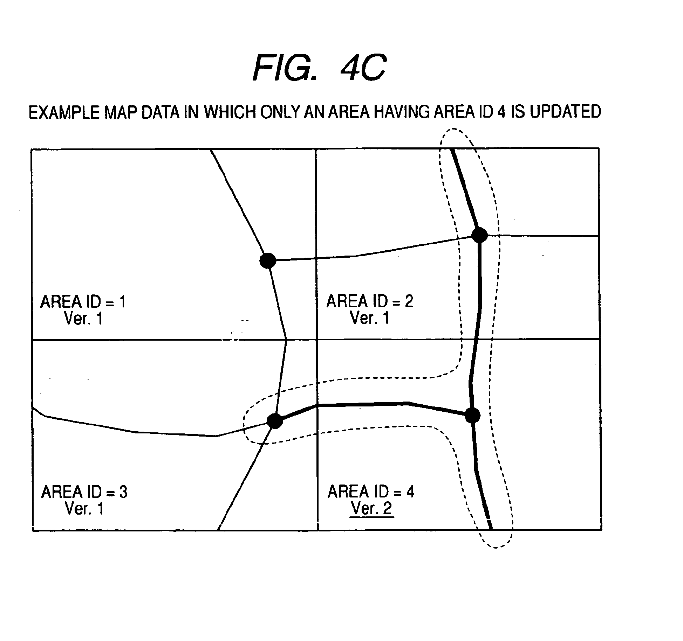

FIG. 4C is a diagram showing map data obtained after one of areas is updated in the first embodiment of the present invention.

The first map update data does not need to be reflected in the map data stored in the terminal 12 because the link 403 is not included in the area having area ID 4. On the other hand, the second map update data needs to be reflected in the map data stored in the terminal 12 because the links included in the area having area ID 4 are updated. Areas having area IDs 2 and 3, which correspond to the second map update data, are also updated.

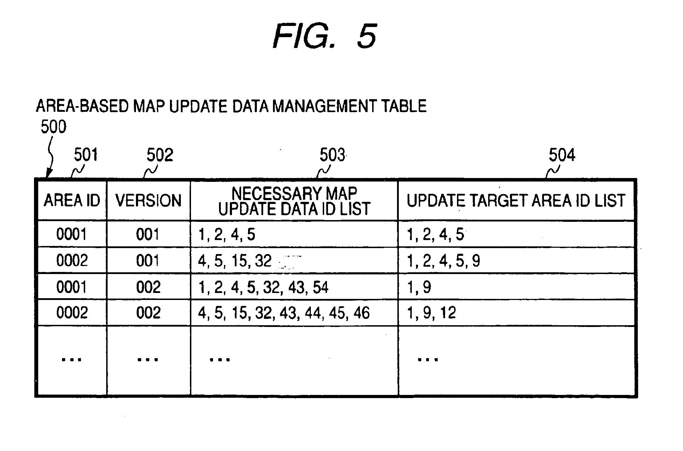

Since the map data stored in the terminal 12 is updated based on the map update data as described above, the map distribution server 11 holds, for each area in each version, the applied map update data and the area or the areas updated together. Example update information for each area in each version is shown in FIG. 5.

FIG. 5 is a diagram showing an area-based map update data management table 500 according to the first embodiment of the present invention. In the area-based map update data management table 500, a record is created for each area in each version. The area-based map update data management table 500 may be included in the difference data generator 216 or in the difference data database 215.

The area-based map update data management table 500 includes an area ID 501, a version 502, a necessary map update data ID list 503, and an update target area ID list 504. The area ID 501 is an identifier of an area. The version 502 is a sequence number indicating a version of the area.

The necessary map update data ID list 503 stores an identifier of map update data which needs to be applied to the map data of the area identified by the area ID 501 and the version 502. The update target area ID list 504 stores an identifier of an area or areas to be updated together when the map data of the area identified by the area ID 501 and the version 502 is updated.

To update map data of a particular area, the terminal 12 first sends version information of the map data held in the terminal 12 and the update target area ID to the map distribution server 11. When the update target area ID and the version information are received, the map distribution server 11 refers to the area-based map update data management table 500 and creates a list of map update data that has been applied to the map data stored in the terminal 12 (applied-update-data list).

Next, the map distribution server 11 obtains a list of map update data associated with the received update target area ID. When map update data included in the applied-update-data list is deleted from the list of map update data associated with the received update target area ID, a list of map update data required to update the update target area can be generated. As described above, only the map update data required to update the area specified by the terminal 12 can be obtained, and the required downloading time can be reduced.

Hereinafter, a description will be given to a procedure to update map data stored in the terminal 12 in the first embodiment of the present invention.

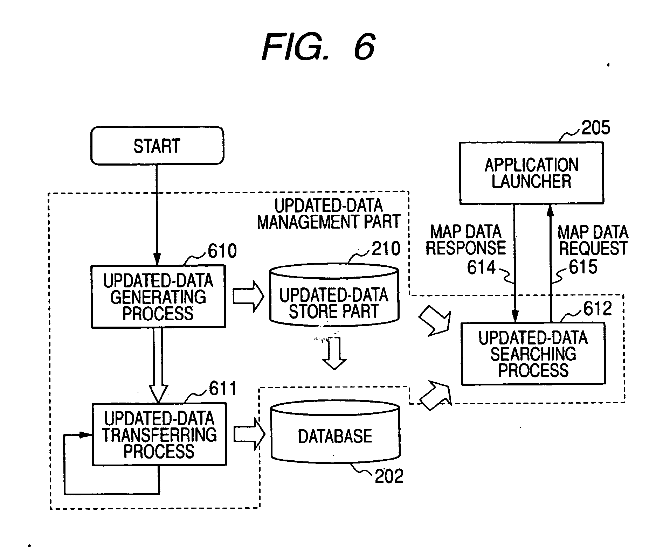

FIG. 6 is a diagram showing an overview of the procedure to update map data stored in the terminal 12 of the first embodiment of the present invention. The map data update processing is executed when the user operates the input device 144 of the terminal 12.

First, the CPU 141 of the terminal 12 requests, through the process of the application launcher 205, the map distribution server 11 to send difference data for an update target area specified by the user. When the distributed difference data is received, the CPU 141 performs an updated-data generating process 610 to generate updated data. The generated updated data is stored in the updated-data store part 210.

When all pieces of updated data have been generated, the CPU 141 of the terminal 12 performs an updated-data transferring process 611 to make the database 202 reflect the generated updated data. The updated-data transferring process 611 is performed repeatedly until the updated data has been fully transferred from the updated-data store part 210 to the database 202 and stored in the database 202. When a large amount of updated data is transferred, a long time is required to complete the updated-data transferring process 611.

In the first embodiment of the present invention, even while the updated-data transferring process 611 is being performed, the updated-data management part 201 can perform the navigation function by using the updated map data.

When a map data request 615 is received, the CPU 141 of the terminal 12 searches the updated data stored in the updated-data store part 210 for the requested map data, through an updated-data searching process 612 performed by the updated-data management part 201. When the requested map data is stored in the updated-data store part 210, the CPU 141 of the terminal 12 fetches the requested map data from the updated-data store part 210. When a part or the whole of the requested map data is not stored in the updated-data store part 210, the CPU 141 of the terminal 12 searches the database 202 for the map data. The map data fetched from the database 202, the map data fetched from the updated-data store part 210, or map data obtained by combining pieces of the map data fetched from the database 202 and the updated-data store part 210 is sent as a map data response 614 in which road connectivity is ensured.

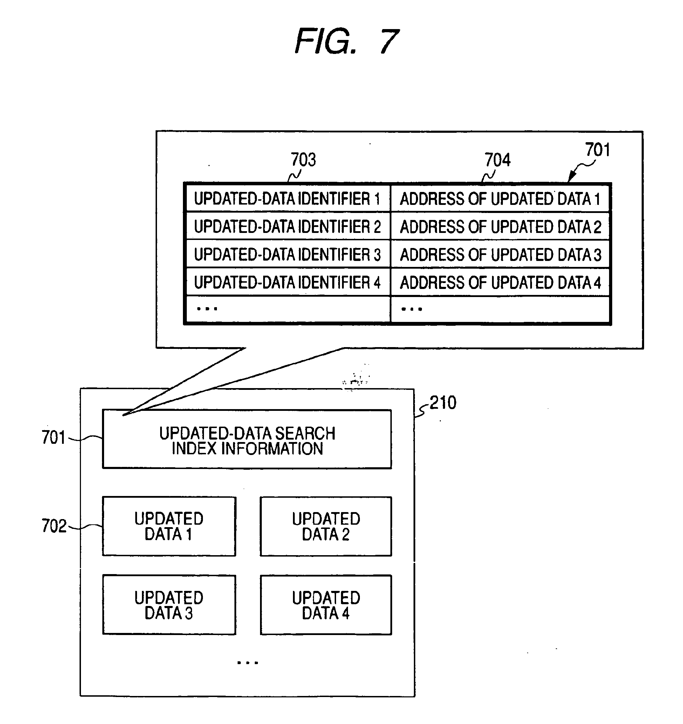

FIG. 7 is a diagram showing a data structure of the updated-data store part 210 of the first embodiment of the present invention.

The updated-data store part 210 includes updated-data search index information 701 and updated data 702.

The updated-data search index information 701 stores index information about the updated data 702 stored in the updated-data store part 210. The updated-data search index information 701 has a structure such that updated data can be fetched at a high speed. In the structure, an identifier of the updated data 702 and the address of the location where the updated data 702 is stored are associated with each other. The updated data can be searched for by a known search algorithm such as binary tree search or linear search. Specifically, the updated-data search index information 701 includes an updated-data identifier 703 and an updated-data address 704. The updated-data identifier 703 corresponds to the area ID of an update target area, for example.

The updated data 702 is obtained after difference data distributed from the map distribution server 11 is applied to the map data stored in the database 202.

Since the updated data corresponds only to an updated area, a large capacity is not required to store a corresponding index. Therefore, it is possible to create the index and to search for the updated data at a high speed. Note that the updated data is deleted when the updated data is completely reflected in the database 202.

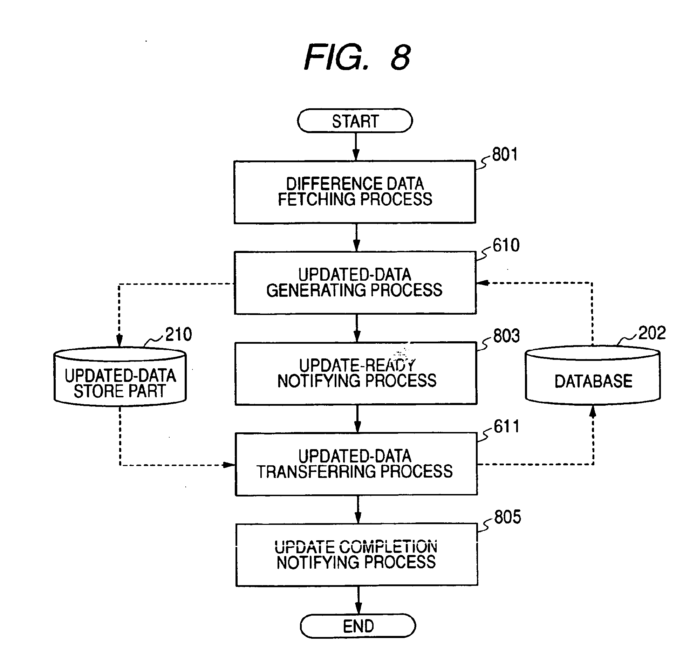

FIG. 8 is a flowchart showing the entire procedure of the update process for the map data stored in the terminal 12, according to the first embodiment of the present invention. The map data update process is performed when the CPU 141 of the terminal 12 executes the various programs stored in the memory 142.

First, the CPU 141 of the terminal 12 performs a difference data fetching process 801. The difference data fetching process 801 is performed when the difference data fetch part 206 is executed.

The CPU 141 of the terminal 12 executes the updated-data generator 207 to perform the updated-data generating process 610. In the updated-data generating process 610, updated data is generated by using difference data fetched through the difference data fetching process 801 and map data stored in the database 202 of the terminal 12.

When the updated-data generating process 610 has been completed, the CPU 141 of the terminal 12 performs an update-ready notifying process 803. In the update-ready notifying process 803, a notification indicating that updating is ready is sent to a module which uses map data, such as an application.

When the update-ready notifying process 803 is performed, the CPU 141 of the terminal 12 switches the map data to be searched for to the updated data. Then, the CPU 141 performs the updated-data transferring process 611, to make the updated data reflected in the database 202, in parallel with another process.

When the updated-data transferring process 611 is completed, the CPU 141 of the terminal 12 performs an update completion notifying process 805 to send a notification indicating that the updating has been completed to the module which uses the map data, and ends the map updating.

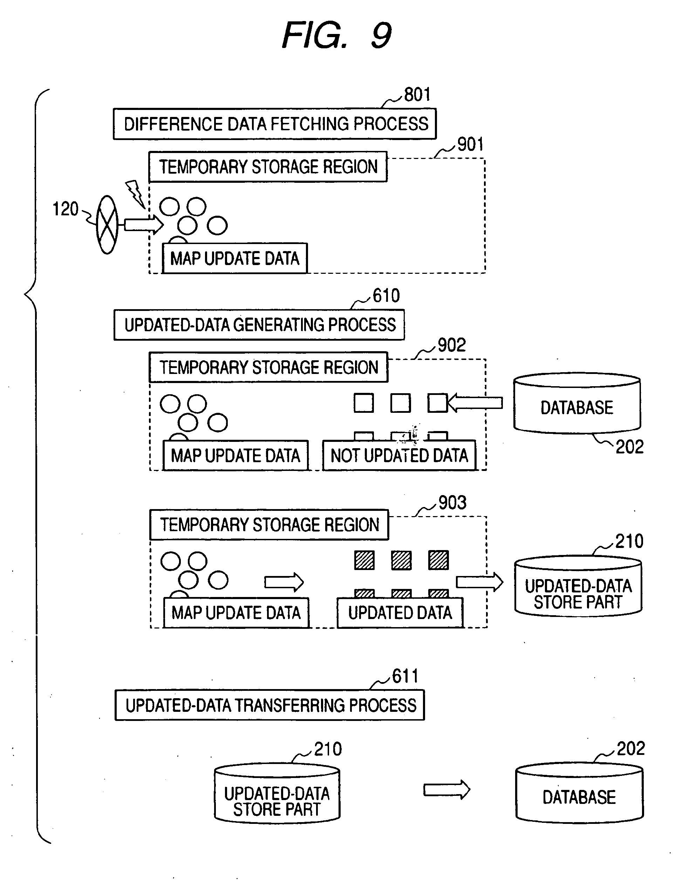

FIG. 9 is a diagram showing a data update state in each process of the map data update processing according to the first embodiment of the present invention.

In the first embodiment of the present invention, a temporary storage region, the updated-data store part 210, in which the updated data is stored, and the database 202, in which the updated map data is finally stored, are used in processes of the map data update processing. Note that the temporary storage region may be provided for the memory 142. Alternatively, the temporary storage region may be provided for the external storage 146 or the like. The map data may be stored in the temporary storage region as files or tables in a database.

The CPU 141 of the terminal 12 first performs the difference data fetching process 801 to fetch map update data from the map distribution server 11. In FIG. 9, reference numeral 901 indicates a state in which the map update data is fetched from the map distribution server 11 via the network 120 and stored in the temporary storage region. Hereinafter, the difference data fetching process 801 will be described together with the data structure of difference data.

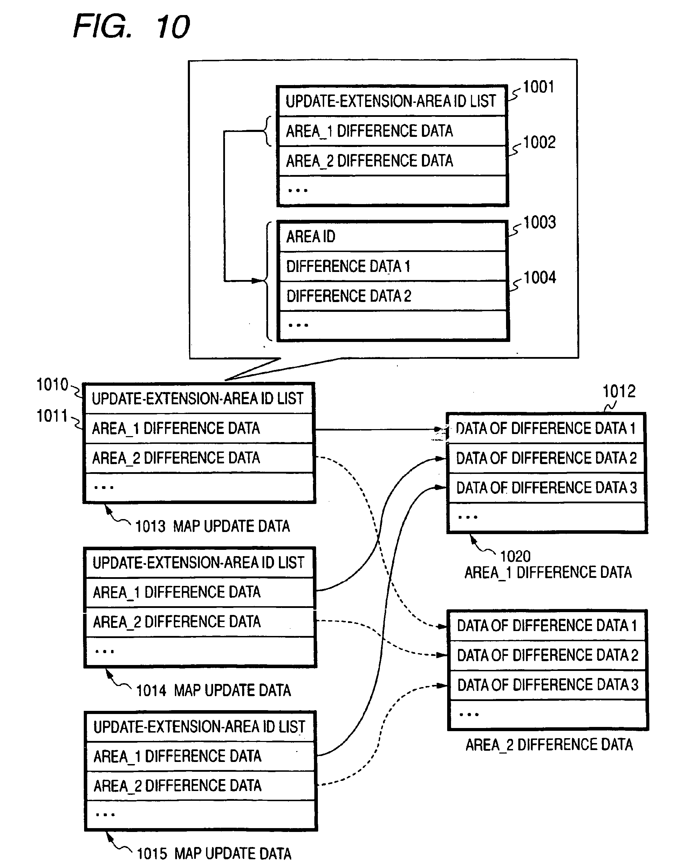

FIG. 10 is a diagram showing an example data structure of difference data according to the first embodiment of the present invention.

Difference data includes an update-extension-area ID list 1001 and area difference data 1002 for each area. The update-extension-area ID list 1001 includes an area ID and the address at which the difference data 1002 for the area specified by the area ID is stored. With this structure, difference data can be extracted for each area.

The area difference data 1002 for each area includes an area ID 1003 and difference data 1004 for the area specified by the area ID 1003. The difference data 1004 includes information about an addition, deletion, and change of the map data for an update target area. When the map data is updated based on the information stored in the difference data 1004, the latest map data is obtained.

Referring to FIG. 10, a description will be given to an example case where difference data for each area included in pieces of map update data 1013, 1014, and 1015 is extracted.

In the difference data fetching process 801, a difference data storage region for an update extension area included in an update-extension-area ID list 1010 is allocated in the temporary storage region. Difference data for each area is stored in the allocated difference data storage region.

Specifically, the CPU 141 of the terminal 12 first creates an area_1 difference data storage region 1020 in order to store area_1 difference data 1011 included in map update data 1013. Then, the area_1 difference data 1011 included in the map update data 1013 is recorded in the area_1 difference data storage region 1020. Difference data for another update extension area, such as an area 2, is similarly recorded. Difference data for each update extension area included in map update data 1014 and 1015 is extracted and stored in the corresponding difference data storage region.

When the difference data fetching process 801 is finished and the difference data for each update target area is stored in the temporary storage region in the terminal 12, the CPU 141 of the terminal 12 generates updated data which reflects the difference. In FIG. 9, reference numeral 902 indicates a state of the temporary storage region in which update target data has been fetched from the database 202. In FIG. 9, reference numeral 903 indicates a state of the temporary storage region in which the difference data has been applied to the update target data, fetched from the database 202. Hereinafter, a procedure of the updated-data generating process 610 will be described together with processes performed before and after the updated-data generating process 610.

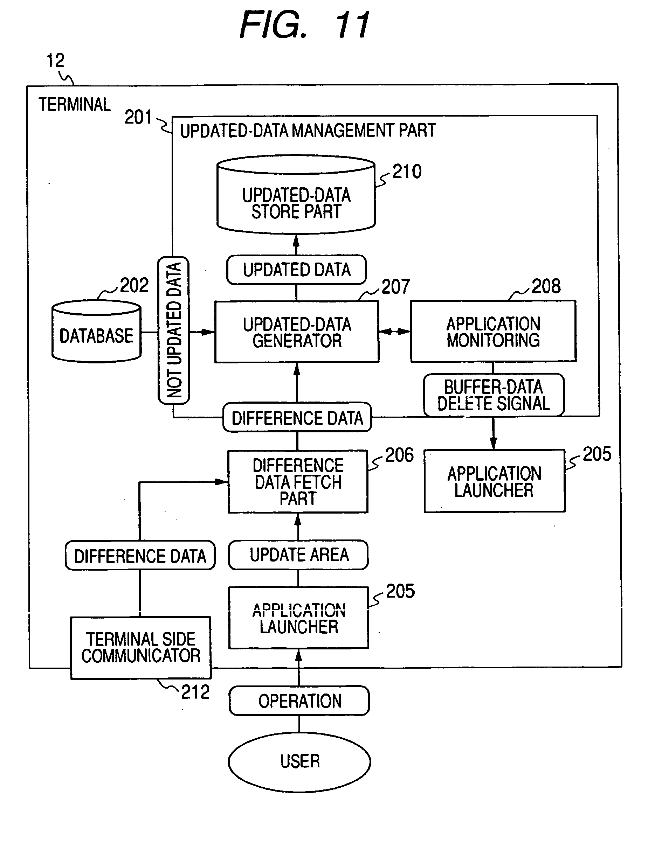

FIG. 11 is a diagram showing a procedure of the updated-data generating process 610 according to the first embodiment of the present invention.

When a map data update request is received from the application launcher 205 through an operation of the user, the CPU 141 of the terminal 12 performs the process of the difference data fetch part 206. The CPU 141 of the terminal 12 requests the map distribution server 11 to send required difference data via the terminal-side communicator 212, based on information on the specified update target area included in the update request.

When the difference data is received from the map distribution server 11, the CPU 141 of the terminal 12 executes the updated-data generator 207 to make the received difference data reflected in the data stored in the database 202 to generate updated data. The generated updated data is stored in the updated-data store part 210. When the updated data is fully generated for the area specified in the update request, the CPU 141 of the terminal 12 ends the updated-data generating process 610.

Just before ending the updated-data generating process 610, the CPU 141 of the terminal 12 sends a buffer-data delete signal to discard data stored in a buffer, to an operating application, through the process of the resident application monitoring part 208. This is to use, when the updated data has been fully generated, the updated data, not the data before updated.

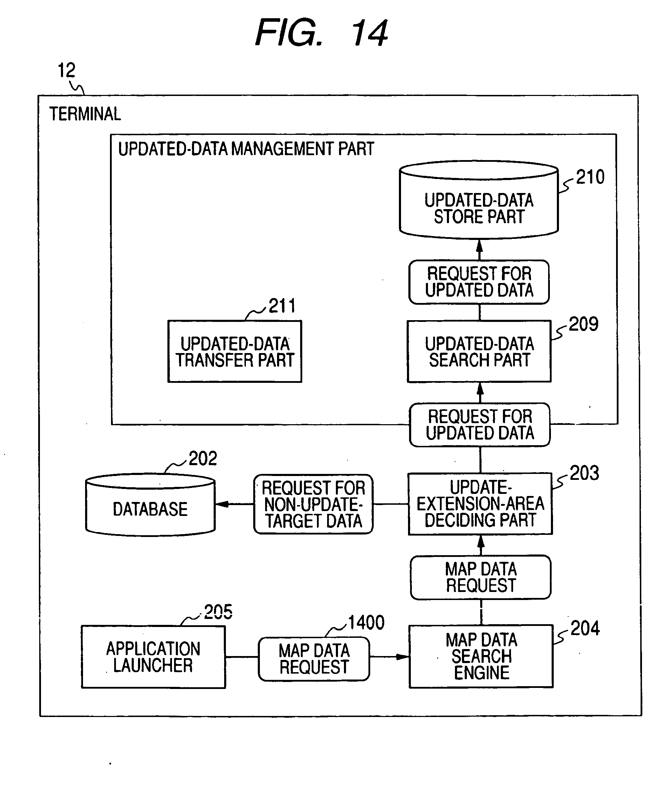

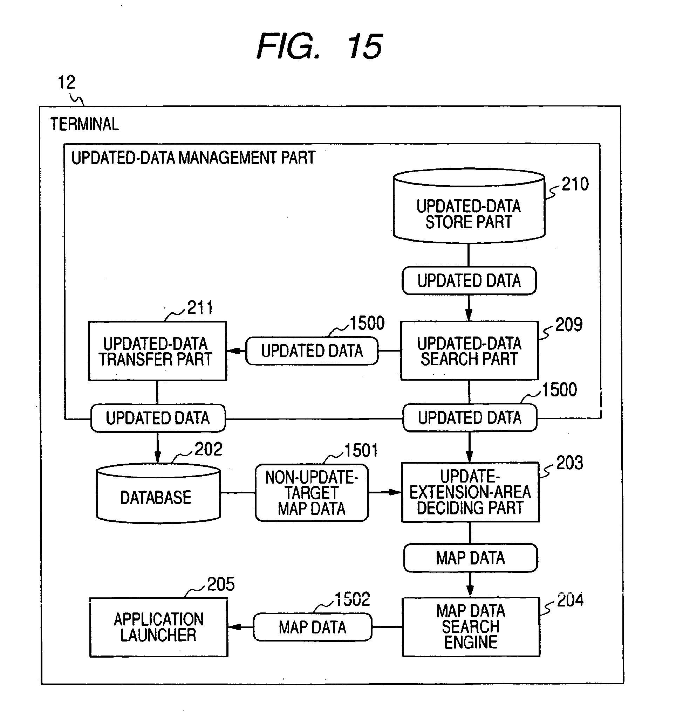

When the buffer-data delete signal is received, the CPU 141 of the terminal 12 discards the map data held by the operating application through the process of the application launcher 205. Then, the CPU 141 of the terminal 12 fetches required map data through the process of the update-extension-area deciding part 203. A data flow in fetching the required map data will be described later with reference to FIGS. 14 and 15.

When the updated-data generating process 610 is ended, the CPU 141 of the terminal 12 executes the updated-data transfer part 211 to start the updated-data transferring process 611. In the updated-data transferring process 611, the CPU 141 of the terminal 12 makes the database 202 reflect the generated updated data. A data flow in making the database 202 reflect the updated data stored in the updated-data store part 210 is shown in the lowest part in FIG. 9. When a request for map data is received from an application while the updated-data transferring process 611 is being performed, the CPU 141 of the terminal 12 sends the updated data stored in the updated-data store part 210 in response. Hereinafter, a procedure of the updated-data transferring process 611 will be described.

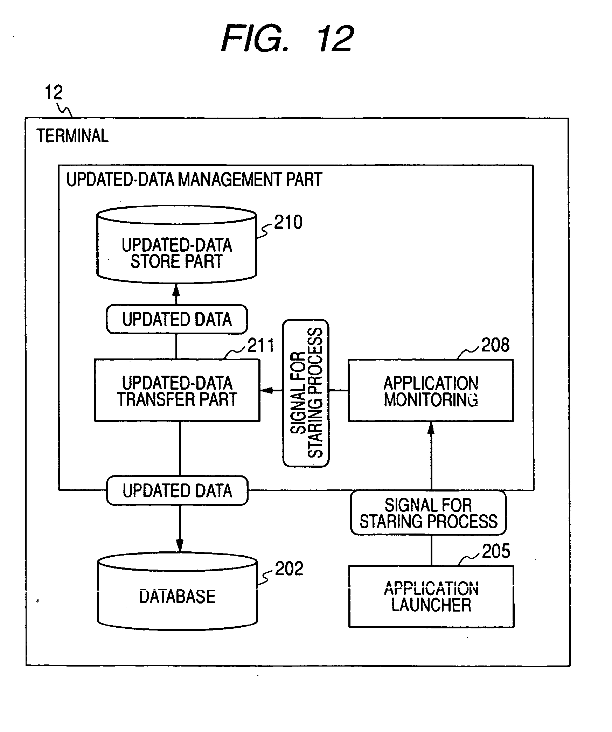

FIG. 12 is a diagram showing a data flow in the updated-data transferring process 611 according to the first embodiment of the present invention. The updated-data transferring process 611 is performed when the CPU 141 of the terminal 12 executes the updated-data transfer part 211.

The CPU 141 of the terminal 12 transfers the updated data to the database 202 to make the updated data reflected in the database 202 when the process load of the application being executed by the application launcher 205 is low.

The updated-data transferring process 611 is performed until the updated data is fully transferred to the database 202, which depends on an application execution state. Note that the application execution state can be obtained by the application monitoring part 208.

The CPU 141 of the terminal 12 executes an application and the updated-data transferring process 611 in parallel by using a known task scheduling method such as an updated-data periodical transfer method.

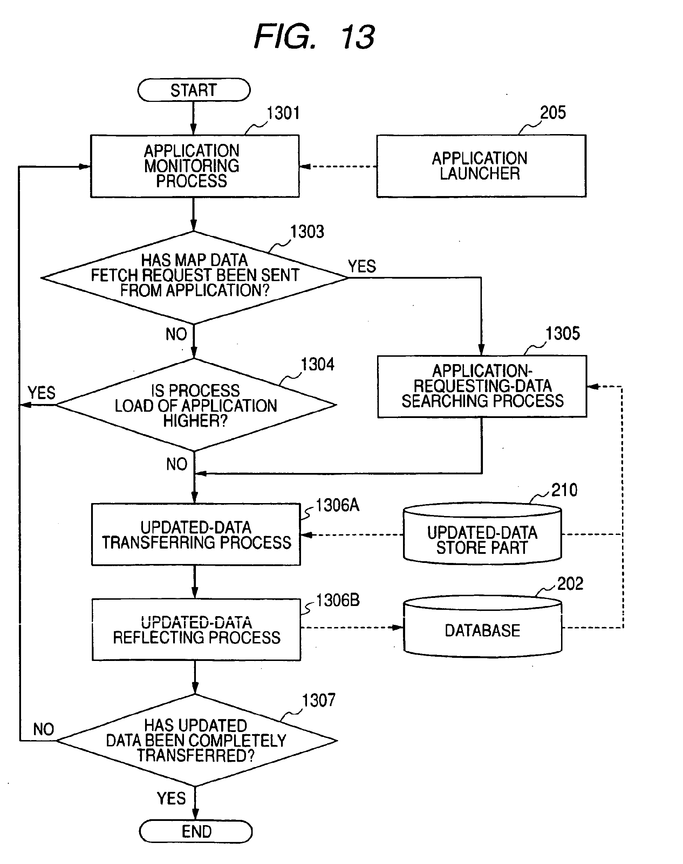

FIG. 13 is a diagram showing a procedure of the updated-data transferring process 611 according to the first embodiment of the present invention.

First, the CPU 141 of the terminal 12 performs an application monitoring process to obtain the operation state of an application being executed in parallel with the updated-data transferring process 611 (Step 1301). In the application monitoring process, the CPU 141 of the terminal 12 determines whether the process load of the application is high by using a known technique.

In the application monitoring process, the CPU 141 of the terminal 12 also monitors a map data fetch request and determines whether a request to fetch map data has been sent from the application (Step 1303). When a request to fetch map data has been sent from the application ("yes" in Step 1303), the CPU 141 of the terminal 12 executes the map data search engine 204 to perform an application-requesting-data searching process (Step 1305), and waits for the requested map data to be fetched.

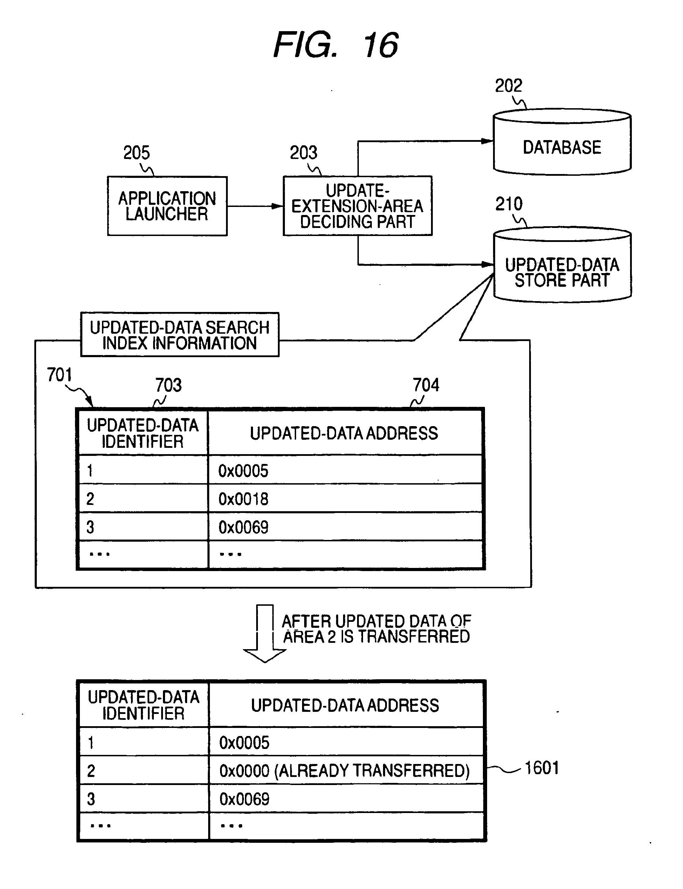

When map data corresponding to the update extension area has been requested, the CPU 141 of the terminal 12 executes the updated-data search part 209 to fetch the updated data, in the application-requesting-data searching process. Further, when map data not corresponding to the update extension area has been requested, the CPU 141 of the terminal 12 fetches the map data from the database 202. Details of the application-requesting-data searching process will be described later with reference to FIG. 16.

When a request to fetch map data has not been sent from the application ("no" in Step 1303), the CPU 141 of the terminal 12 determines whether the process load of the application is higher than a predetermined threshold (Step 1304). When the process load of the application is higher ("yes" in Step 1304), the process flow returns to the application monitoring process of Step 1301, without performing the data update process.

When the process load of the application is not higher ("no" in Step 1304), the CPU 141 of the terminal 12 transfers the updated data stored in the updated-data store part 210 (Step 1306A) to make the updated data reflected in the database 202 (Step 1306B).

The CPU 141 of the terminal 12 finally determines whether the updated data has been completely reflected in the database 202 (Step 1307). When the updated data has not been completely reflected in the database 202 ("no" in Step 1307), the process flow returns to the application monitoring process of Step 1301. On the other hand, when the updated data has been completely reflected in the database 202 ("yes" in Step 1307) , the process is ended.

FIG. 14 is a diagram of a data flow in a process where an application requests map data in the first embodiment of the present invention.

When a map data request 1400 is sent from an application, the CPU 141 of the terminal 12 executes the map data search engine 204. In the map data request 1400, an area whose map data is requested is specified.

When the map data search engine 204 is executed, the CPU 141 of the terminal 12 extracts, from the map data request 1400, the area ID of the area whose map data is to be fetched. The CPU 141 of the terminal 12 executes the update-extension-area deciding part 203 to determine whether the map data having the extracted area ID is to be updated.

When the map data having the extracted area ID is not to be updated, the CPU 141 of the terminal 12 fetches the map data from the database 202. On the other hand, when the map data having the extracted area ID is to be updated, the CPU 141 of the terminal 12 executes the updated-data search part 209 to search the updated-data store part 210 to fetch the requested map data. At this time, when the updated data has already been stored in the database 202, the CPU 141 of the terminal 12 may fetch the data from the database 202.

FIG. 15 is a diagram of a data flow in a process of fetching requested map data and sending the map data to an application, in the first embodiment of the present invention.

When map data that is not to be updated has been requested, the CPU 141 of the terminal 12 sends non-update-target map data 1501 from the database 202 to the update-extension-area deciding part 203. On the other hand, when map data that is to be updated has been requested, the CPU 141 of the terminal 12 sends updated data 1500 from the updated-data store part 210 to the update-extension-area deciding part 203 through the process of the updated-data search part 209.

The CPU 141 of the terminal 12 may send the fetched updated data 1500 to the updated-data transfer part 211. When the updated data 1500 is sent to the updated-data transfer part 211 and reflected in the database 202, the number of times map data is read from the updated-data store part 210 is reduced.

The CPU 141 of the terminal 12 combines the received non-update-target map data 1501 and updated data 1500 in the process of the update-extension-area deciding part 203, and sends resultant map data to the map data search engine 204. The CPU 141 of the terminal 12 sends resultant map data 1502 to the application.

FIG. 16 is a diagram of an application-requesting-data searching process according to the first embodiment of the present invention.

When a request for map data is received from an operating application, the CPU 141 of the terminal 12 executes the update-extension-area deciding part 203 to determine whether the requested map data corresponds to the update extension area. Whether the requested map data corresponds to the update extension area is determined by referring to the updated-data search index information 701 included in the updated-data store part 210. Specifically, it is determined that the requested map data corresponds to the update extension area when an updated-data search index 701 has an updated-data address 704 corresponding to an update target area. Note that the updated-data identifier 703 shown in FIG. 16 corresponds to the area ID, as described above.

Further, the address value of updated data that has already been transferred to the database 202 through the updated-data transferring process 611 is changed to "0000" as shown in an index 1601. As described above, whether the requested updated data of the area has been reflected in the database 202 can be determined in the process of the update-extension-area deciding part 203.

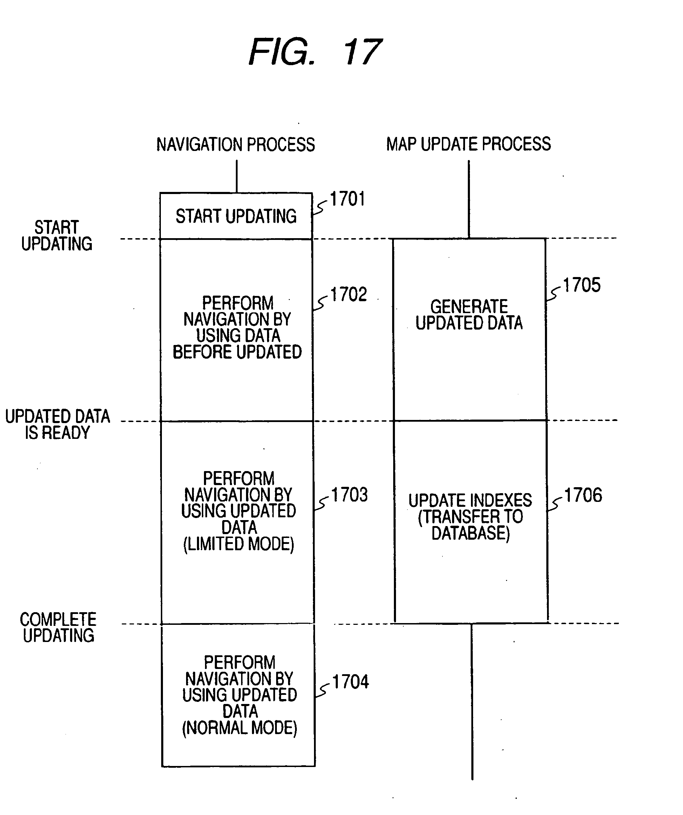

FIG. 17 is a diagram of a process performed when map data is updated in the first embodiment of the present invention.

When an instruction to update map data is received from the user, the terminal 12 starts an update process (1701). A normal navigation process is performed until the update process is started.

The terminal 12 receives difference data from the map distribution server 11 and generates updated data (1705). The navigation process is performed by using data before updated because data consistency cannot be ensured until the updated data is generated (1702).

When the updated data has been generated, the terminal 12 notifies an application that the updating has been completed, transfers the updated data stored in the updated-data store part 210 to the database 202, and starts an index update process (1706). The terminal 12 performs the navigation process (1703) by using the updated data, obtained by combining the map data stored in the database 202 and the updated data stored in the updated-data store part 210 through the process of the update-extension-area deciding part 203.

In the terminal 12, when the index update process is completed and the updated data has been fully transferred to the database 202, the map data stored in the database 202 serves as updated data. Thereafter, the terminal 12 performs the normal navigation process by using the updated data (1704).

As described above, according to the present invention, it is not necessary to stop the navigation function even while the map data and the index of the map data are being updated.

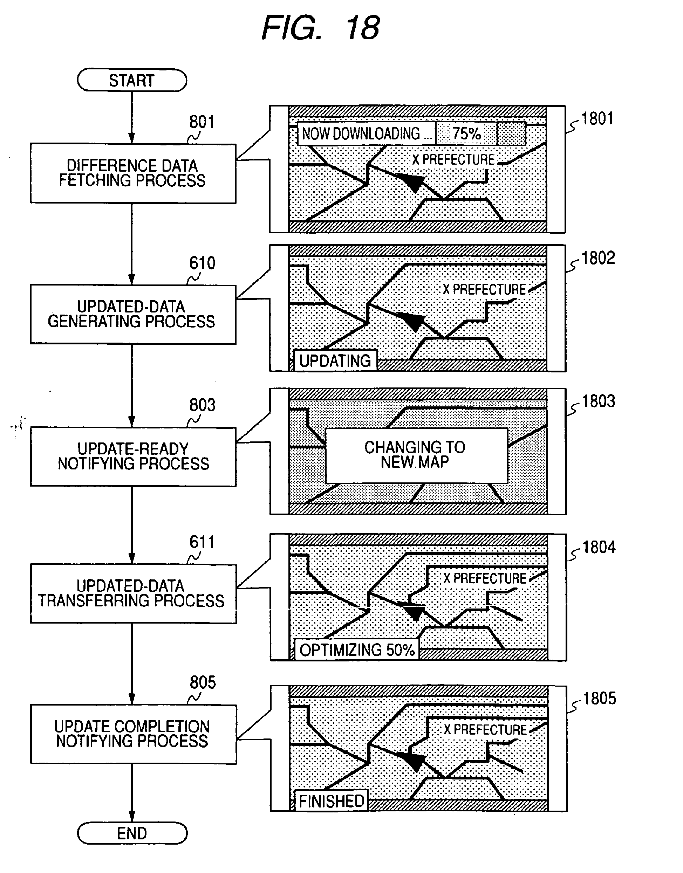

FIG. 18 is a diagram of the processes in the procedure and corresponding screen transitions according to the first embodiment of the present invention.

When an instruction to update map data is received from the user, the terminal 12 performs the difference data fetching process 801. At this time, the output device 145 of the terminal 12 displays a difference data fetching state (1801).

After the difference data required to update the map data is fetched, the terminal 12 performs the updated-data generating process 610. At this time, the output device 145 of the terminal 12 displays a message indicating that the map data is being updated (1802). Note that a massage to the user just needs to indicate that some process is being performed to generate updated data, to make the user understand that difference data has been downloaded.

When the updated data has been generated, the terminal 12 can use the latest data. The terminal 12 then discards the data before updated, held by the application, and performs the update-ready notifying process 803 to fetch the updated data. At this time, the output device 145 of the terminal 12 displays a message indicating that the map data is changed to the updated map data (1803). In the first embodiment of the present invention, the navigation function is stopped only while the data before updated, held by the application, is being discarded in the update-ready notifying process 803.

The terminal 12 performs the updated-data transferring process 611 to transfer the data to the database 202 and to generate indexes. At this time, the output device 145 of the terminal 12 displays the progress in order to indicate that the updated-data transferring process 611 is being performed (1804). At this stage, it is possible to notify the user that performance is lowered due to the updating process of the database 202, although the navigation function is performed by using the latest data.

The terminal 12 finally performs the update completion notifying process 805 to notify that the map data has been updated. At this time, the output device 145 of the terminal 12 displays a message indicating the completion of updating of the map data (1805).

According to the first embodiment of the present invention, even while indexes are being generated in the database 202, the updated map data can be referred to by fetching the updated data from the updated-data store part 210.

Further, according to the first embodiment of the present invention, since it is not necessary to stop the navigation function except for the timing to clear the buffer data to switch from the map data before updated to the updated map data, the downtime of the navigation function can be reduced.

Note that the present invention is applied to a terminal to be mounted in a vehicle in the first embodiment of the present invention, and the present invention may also be applied to mobile terminals such as cellular phones or personal digital assistants (PDAs).

### Second Embodiment

In the first embodiment of the present invention, updated data is stored in the updated-data store part. In a second embodiment of the present invention, updated data is also stored in a database.

A map data distribution system according to the second embodiment of the present invention has the same configuration as the map data distribution system of the first embodiment. Note that descriptions of identical parts and identical processes are omitted.

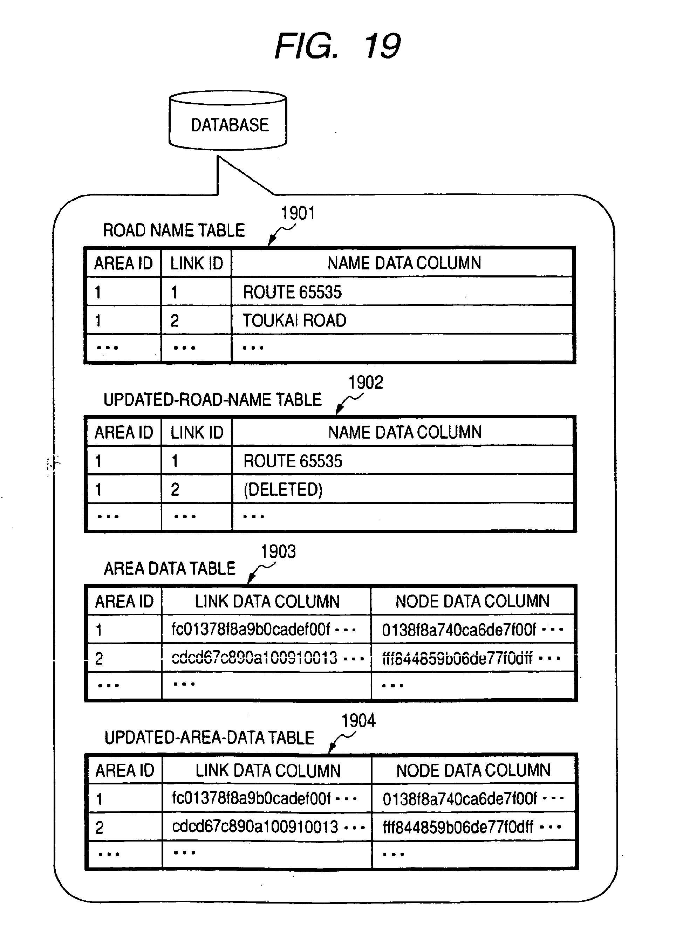

FIG. 19 is a diagram showing example tables stored in a database of the second embodiment of the present invention. FIG. 19 shows a road name table 1901, an updated-road-name table 1902, an area data table 1903, and an updated-area-data table 1904.

The road name table 1901 includes an area ID, a link ID, and a name data column. The name data column stores name data of each road. The updated-road-name table 1902 has the same structure as the road name table 1901.

The area data table 1903 has the same structure as the area data table 300 of the first embodiment of the present invention. The updated-area-data table 1904 has the same structure as the area data table 1903.

In this way, when the updated data is managed by using DBMS, common means can be used both for searching for data before updated and for searching for updated data. Hereinafter, a procedure to search for updated data which has not been reflected in the database will be specifically described.

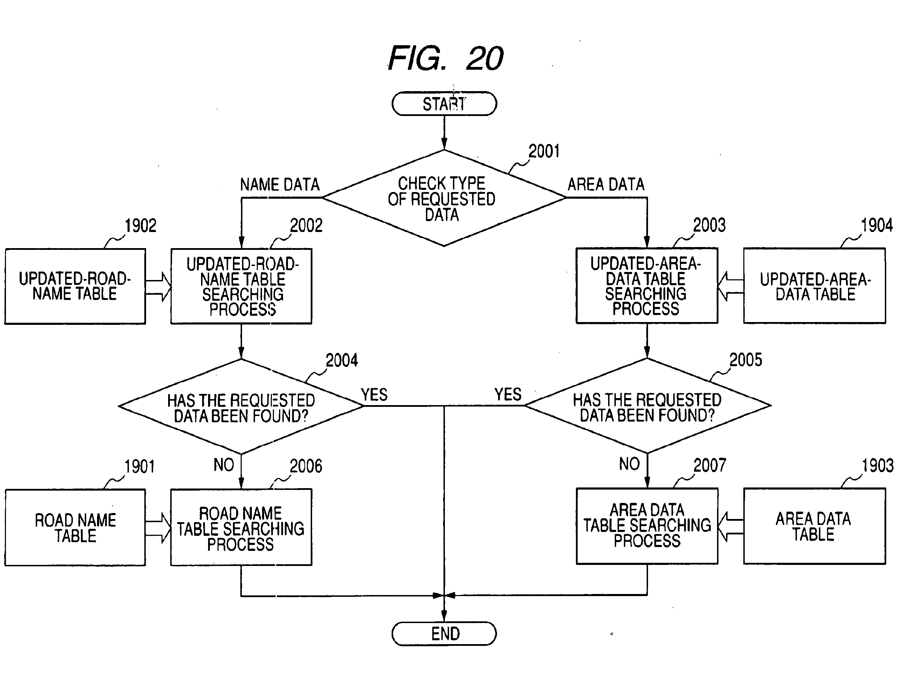

FIG. 20 is a flowchart showing a procedure of an application-requesting-data searching process according to the second embodiment of the present invention.

First, the CPU 141 of the terminal 12 determines the type of requested data (Step 2001). In the second embodiment of the present invention, it is determined whether the requested data is name data of a road or area data. The CPU 141 of the terminal 12 performs a process corresponding to the determined type of data. If there is another type of data, such as traffic regulation information, in addition to the aforementioned two types of data, there needs a process corresponding to the other type of data.

In a case where the type of data is determined to be "name data" ("name data" in Step 2001), the CPU 141 of the terminal 12 performs an updated- road-name table searching process (Step 2002). In the updated-road-name table searching process, the updated-road-name table 1902 is searched for the requested data. Then, the CPU 141 of the terminal 12 determines whether the requested data has been found in the updated data (Step 2004).

When the requested data has been found in the updated data ("yes" in Step 2004), the CPU 141 of the terminal 12 extracts the requested data from the updated data. On the other hand, when the requested data has not been found in the updated data ("no" in Step 2004), the CPU 141 of the terminal 12 searches the road name table 1901 for the requested data and extracts the requested data from the road name table 1901 (Step 2006).

On the other hand, in a case where the type of data is determined to be "area data" ("area data" in Step 2001), the CPU 141 of the terminal 12 performs an updated-area-data table searching process (Step 2003). In the updated-area-data table searching process, the updated-area-data table 1904 is searched for the requested data. Then, the CPU 141 of the terminal 12 determines whether the requested data has been found in the updated data (Step 2005).

When the requested data has been found in the updated data ("yes" in Step 2005), the CPU 141 of the terminal 12 extracts the requested data from the updated data. On the other hand, when the requested data has not been found in the updated data ("no" in Step 2005), the CPU 141 of the terminal 12 searches the area data table 1903 for the requested data and extracts the requested data from the area data table 1903 (Step 2007).

As described above, since the table for storing updated data corresponding to the table for storing requested data is generated in the database, a common procedure can be used to fetch the updated data.

According to the second embodiment of the present invention, updated data can be easily managed by using the function of DBMS. Further, flexible searching can be performed by using the function of DBMS.

### Third Embodiment

In the first and second embodiments of the present invention, link data and node data are stored in the area data table in a compressed format. In a third embodiment of the present invention, one record of road data is stored for each link or each node.

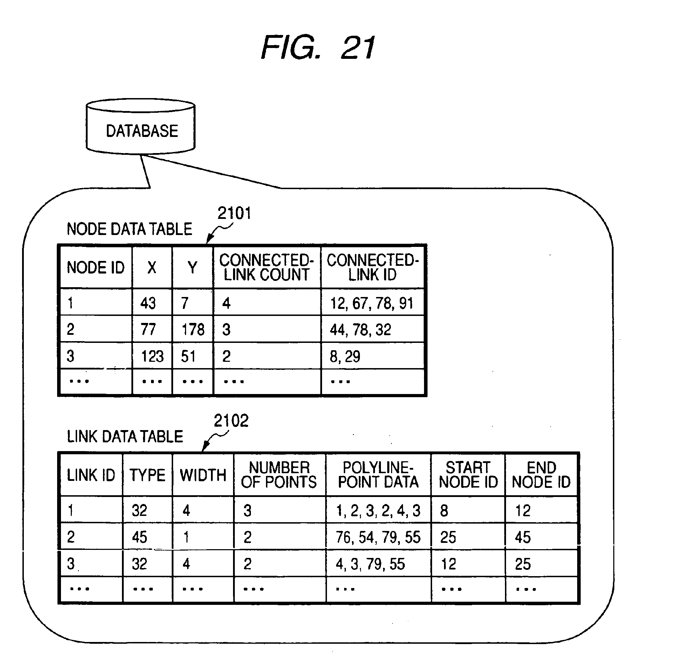

FIG. 21 is a diagram showing a node data table 2101 and a link data table 2102 according to the third embodiment of the present invention.

The node data table 2101 and the link data table 2102 store the same information as in the first and second embodiments of the present invention. When data is stored in the table format in this way, requested data can be searched for by using a search function of DBMS.

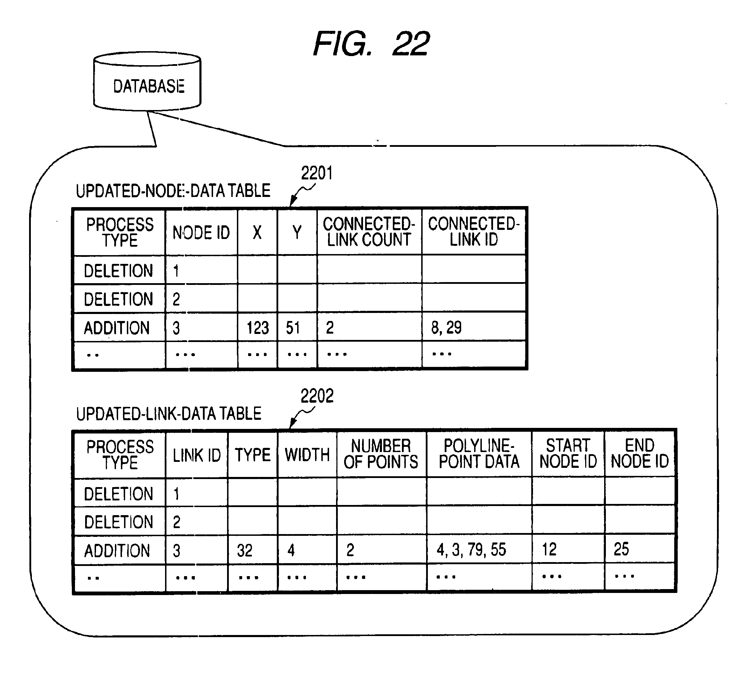

FIG. 22 is a diagram showing tables for storing updated data, according to the third embodiment of the present invention.

In a case where node data or link data is stored in units of records in the table as in the third embodiment of the present invention, a table for storing updated data for nodes and a table for storing updated data for links are required. For this reason, an updated-node-data table 2201 and an updated-link-data table 2202 are further provided in the third embodiment of the present invention.

The updated-node-data table 2201 has a structure obtained by adding a column of "process type" to the node data table 2101. Similarly, the updated-link-data table 2202 has a structure obtained by adding a column of "process type" to the link data table 2102. The column of "process type" stores the content of a process, such as "deletion" or "addition" of the record.

Searching the tables storing map data, such as the node data table 2101, by using the search function of DBMS can also be used to search the tables storing updated data, such as the updated-node-data table 2201. For example, when coordinates (x,y) are specified to specify a zone which includes the coordinates to search for a node included in the zone, the node data table 2101 and the updated-node-data table 2201 are both requested to be searched. Updated data can be obtained by applying a process such as addition, deletion, or update, according to the process type obtained from the updated-node-data table 2201, to the results obtained from the node data table 2101.

According to the third embodiment of the present invention, pieces of information constituting node data and/or link data can be flexibly searched for by using a function of DBMS.

## Claims

1. A map data distribution system comprising:
a data distribution server configured to distribute map data;
and
a terminal configured to receive the map data,
the data distribution server including a difference data database configured to store when the map data is updated, difference data between map data before updated and updated map data, for each area, and
the terminal including:
a database configured to store the map data distributed from the map distribution server; and
an updated-data store part configured to store the updated map data until the updated map data is reflected in the database, wherein:
when a request for map data of ah updated target area is received from the terminal, the data distribution server is configured to send difference data for the updated target area from the difference data database to the terminal;
the terminal is configured to generate updated data by applying the difference data sent from the data distribution server to the map data stored in the database;
the terminal is configured to store the generated updated data in the updated-data store part;
the terminal is configured to write the updated data stored in the updated-data store part, in the database;
when, at the terminal, a request to fetch the map data is received from an application which uses the map data while the updated data stored in the updated-data store part is being written in the database, the terminal is configured to determine whether the fetch-requested map data has been stored in the updated-data store part;
when the fetch-requested map data has been stored in the updated-data store part, the terminal is configured to fetch the fetch-requested map data from the updated-data store part; and
when the fetch-requested map data has not been stored in the updated-data store part, the terminal is configured to fetch the fetch-requested map data from the database.

2. A map data distribution system according to claim 1,
wherein:
an area to be also updated when the map data of the updated target area is updated is stored in the difference data database as an update extension area corresponding to the updated target area; and
the data distribution server is configured to send, to the terminal, the difference data for the update target area and the difference data for the update extension area corresponding to the update target area.

3. A map data distribution system according to claim 1, wherein, when an area corresponding to the fetch-requested map data includes an update target area and an area that is not an update target area, the terminal is configured to combine a part of the updated data stored in the updated-data store part and a part of the map data stored in the database to fetch the fetch-requested map data.

4. A map data distribution system according to claim 1, wherein:
the terminal further comprises a monitor part for extracting an operation state of the terminal; and
when the operation state of the terminal extracted by the monitor part indicates that an operation load of the terminal is low, the terminal is configured to make the database reflect the updated data stored in the updated-data store part.

5. A map data distribution system according to claim 1,
wherein the terminal is configured to provide, in response to the request to fetch map data, the map data stored in the database until the generated updated data is fully written in the updated-data store part.

6. A map data distribution system according to claim 5,
wherein, when the generated updated data has been fully written in the updated-data store part, the terminal is configured to notify that the updated map data is to be provided.

7. A map data updating method for a map data distribution system including a data distribution server which distributes map data and a terminal which receives the map data, the map data updating method updating the map data stored in the terminal,
the data distribution server including a difference data database for storing, when the map data is updated, difference data between map data before updated and updated map data, for each area, and
the terminal including:
a database for storing the map data distributed from the map distribution server; and
an updated-data store part for storing the updated map data until the updated map data is reflected in the database,
the map data updating method comprising the steps of:
when a request for map data of an updated target area is received from the terminal, the data distribution server sending difference data for the updated target area from the difference data database to the terminal;
the terminal generating updated data by applying the difference data sent from the data distribution server to the map data stored in the database;
the terminal writing the generated updated data in the updated-data store part;
the terminal writing the updated data stored in the updated-data store part, in the database;
when a request to fetch the map data is received from an application which uses the map data while the updated data stored in the updated-data store part is being written in the database, the terminal determining whether the fetch-requested map data has been stored in the updated-data store part;
when the fetch-requested map data has been stored in the updated-data store part, the terminal fetching the fetch-requested map data from the updated-data store part; and
when the fetch-requested map data has not been stored in the updated-data store part, the terminal fetching the fetch-requested map data from the database.

8. A map data updating method according to claim 7, wherein:
the data distribution server stores, when storing the difference data, an area to be also updated when the map data of the updated target area is updated, as an update extension area corresponding to the updated target area, in the difference data database; and
the data distribution server sends, to the terminal, the difference data for the update target area and the difference data for the update extension area corresponding to the update target area.

9. A map data updating method according to claim 7, wherein, when an area corresponding to the requested map data includes an update target area and an area that is not an update target area, the terminal combines a part of the updated data stored in the updated-data store part and a part of the map data stored in the database to fetch the fetch-requested map data.

10. A map data updating method according to claim 7, wherein:
the terminal further includes a monitor part for extracting an operation state of the terminal; and
the map data updating method further comprises the step of, the operation state of the terminal extracted by the monitor part indicates that an operation load of the terminal is low, the terminal making the database reflect the updated data stored in the updated-data store part.

11. A map data updating method according to claim 7, wherein the terminal provides, in response to the request to fetch map data, the map data stored in the database until the generated updated data is fully written in the updated-data store part.

12. A map data updating method according to claim 11, wherein, when the generated updated data has been fully written in the updated-data store part, the terminal notifies that the updated map data is to be provided.

## Patentansprüche

1. Kartendatenverteilungssystem umfassend:
einen Datenverteilungsserver, der zum Verteilen von Kartendaten ausgelegt ist, und
ein Terminal, das zum Empfangen der Kartendaten ausgelegt ist,
wobei der Datenverteilungsserver eine Differenzdatenbank enthält, die zum Speichern von Differenzdaten zwischen Kartendaten vor der Aktualisierung und aktualisierten Kartendaten für jeden Bereich, wenn die Kartendaten aktualisiert werden, ausgelegt ist, und
wobei das Terminal enthält:
eine Datenbank, die zum Speichern der vom Kartenverteilungsserver verteilten Kartendaten ausgelegt ist, und
ein Speicherteil für aktualisierte Daten das zum Speichern der aktualisierten Kartendaten, bis die aktualisierten Kartendaten in der Datenbank wiedergegeben werden, ausgelegt ist, wobei:
wenn eine Anforderung für Kartendaten eines aktualisierten Zielbereichs vom Terminal empfangen wird, der Datenverteilungsserver dazu ausgelegt ist, Differenzdaten für den aktualisierten Zielbereich aus der Differenzdatenbank an das Terminal zu senden;
das Terminal dazu ausgelegt ist, aktualisierte Daten zu erzeugen, indem die vom Datenverteilungsserver gesendeten Differenzdaten auf die in der Datenbank gespeicherten Kartendaten angewendet werden;
das Terminal dazu ausgelegt ist, die erzeugten aktualisierten Daten im Speicherteil für aktualisierte Daten zu speichern;
das Terminal dazu ausgelegt ist, die im Speicherteil für aktualisierte Daten gespeicherten aktualisierten Daten in die Datenbank zu schreiben;
wenn am Terminal eine Anforderung zum Zugriff auf die Kartendaten von einer Anwendung empfangen wird, die die Kartendaten verwendet, während die im Speicherteil für aktualisierte Daten gespeicherten aktualisierten Daten in die Datenbank geschrieben werden, das Terminal zu bestimmen ausgelegt ist, ob die Kartendaten, deren Zugriff angefordert wird, im Speicherteil für aktualisierte Daten gespeichert worden sind;
wenn die Kartendaten, deren Zugriff angefordert wird, im Speicherteil für aktualisierte Daten gespeichert worden sind, das Terminal dazu ausgelegt ist, auf die Kartendaten, deren Zugriff angefordert wird, im Speicherteil für aktualisierte Daten zuzugreifen; und
wenn die Kartendaten, deren Zugriff angefordert wird, nicht im Speicherteil für aktualisierte Daten gespeichert worden sind, das Terminal dazu ausgelegt ist, auf die Kartendaten, deren Zugriff angefordert wird, in der Datenbank zuzugreifen.

2. Kartendatenverteilungssystem nach Anspruch 1, wobei:
ein Bereich, der ebenfalls zu aktualisieren ist, wenn die Kartendaten des aktualisierten Zielbereichs aktualisiert werden, in der Differenzdatenbank als ein dem aktualisierten Zielbereich entsprechender Aktualisierungerweiterungsbereich gespeichert wird; und
der Datenverteilungsserver dazu ausgelegt ist, an das Terminal die Differenzdaten für den Aktualisierungszielbereich und die Differenzdaten für den dem Aktualisierungszielbereich entsprechenden Aktualisierungserweiterungsbereich zu senden.

3. Kartendatenverteilungssystem nach Anspruch 1, wobei das Terminal, wenn ein Bereich, der den Kartendaten, deren Zugriff angefordert wird, entspricht, einen Aktualisierungszielbereich und einen Bereich, der kein Aktualisierungszielbereich ist, enthält, dazu ausgelegt ist, einen Teil der im Speicherteil für aktualisierte Daten gespeicherten aktualisierten Daten und einen Teil der in der Datenbank gespeicherten Kartendaten kombiniert, um auf die Kartendaten, deren Zugriff angefordert wird, zuzugreifen.

4. Kartendatenverteilungssystem nach Anspruch 1, wobei:
das Terminal ferner ein Überwachungsteil zum Extrahieren eines Betriebszustands des Terminal umfaßt, und
das Terminal, wenn der vom Überwachungsteil extrahierte Betriebszustand des Terminals angibt, dass eine Betriebsauslastung des Terminals gering ist, dazu ausgelegt ist, die Datenbank die im Speicherteil für aktualisierte Daten gespeicherten aktualisierten Daten wiedergeben zu lassen.

5. Kartendatenverteilungssystem nach Anspruch 1, wobei das Terminal dazu ausgelegt ist, auf eine Anforderung zum Zugriff auf Kartendaten hin die in der Datenbank gespeicherten Kartendaten bereit zu stellen, bis die erzeugten aktualisierten Daten vollständig in das Speicherteil für aktualisierte Daten geschrieben sind.

6. Kartendatenverteilungssystem nach Anspruch 5, wobei das Terminal, wenn die erzeugten aktualisierten Daten vollständig in das Speicherteil für aktualisierte Daten geschrieben worden sind, bekannt zu geben, dass die aktualisierten Kartendaten bereit zu stellen sind.

7. Kartendatenaktualisierungsverfahren für ein Kartendatenverteilungssystem, das einen Datenverteilungsserver, der Kartendaten verteilt, und ein Terminal, das die Kartendaten empfängt, enthält, wobei das Kartendatenaktualisierungsverfahren die im Terminal gespeicherten Kartendaten aktualisiert,
wobei der Datenverteilungsserver eine Differenzdatenbank zum Speichern von Differenzdaten zwischen Kartendaten vor der Aktualisierung und aktualisierten Kartendaten für jeden Bereich, wenn die Kartendaten aktualisiert werden, enthält, und
wobei das Terminal enthält:
eine Datenbank zum Speichern der vom Datenverteilungsserver verteilten Kartendaten und
ein Speicherteil für aktualisierte Daten zum Speichern der aktualisierten Kartendaten, bis die aktualisierten Kartendaten in der Datenbank wiedergegeben werden,
wobei das Kartendatenaktualisierungsverfahren die folgenden Schritte umfaßt:
wenn eine Anforderung für Kartendaten eines aktualisierten Zielbereichs vom Terminal empfangen wird, sendet der Datenverteilungsserver Differenzdaten für den aktualisierten Zielbereich aus der Differenzdatenbank an das Terminal;
das Terminal erzeugt aktualisierte Daten, indem die vom Datenverteilungsserver gesendeten Differenzdaten auf die in der Datenbank gespeicherten Kartendaten angewendet werden;
das Terminal schreibt die erzeugten aktualisierten Daten in das Speicherteil für aktualisierte Daten;
das Terminal schreibt die im Speicherteil für aktualisierte Daten gespeicherten aktualisierten Daten in die Datenbank;
wenn eine Anforderung zum Zugriff auf die Kartendaten von einer Anwendung empfangen wird, die die Kartendaten verwendet, während die im Speicherteil für aktualisierte Daten gespeicherten aktualisierten Daten in die Datenbank geschrieben werden, bestimmt das Terminal, ob die Kartendaten, deren Zugriff angefordert wird, im Speicherteil für aktualisierte Daten gespeichert worden sind;
wenn die Kartendaten, deren Zugriff angefordert wird, im Speicherteil für aktualisierte Daten gespeichert worden sind, greift das Terminal auf die Kartendaten, deren Zugriff angefordert wird, im Speicherteil für aktualisierte Daten zu; und
wenn die Kartendaten, deren Zugriff angefordert wird, nicht im Speicherteil für aktualisierte Daten gespeichert worden sind, greift das Terminal auf die Kartendaten, deren Zugriff angefordert wird, in der Datenbank zu.

8. Kartendatenaktualisierungsverfahren nach Anspruch 7, wobei:
der Datenverteilungsserver beim Speichern der Differenzdaten einen Bereich, der ebenfalls zu aktualisieren ist, wenn die Kartendaten des aktualisierten Zielbereichs aktualisiert werden, als einen dem aktualisierten Zielbereich entsprechenden Aktualisierungserweiterungsbereich in der Differenzdatenbank speichert; und
der Datenverteilungsserver an das Terminal die Differenzdaten für den Aktualisierungszielbereich und die Differenzdaten für den dem Aktualisierungszielbereich entsprechenden Aktualisierungserweiterungsbereich sendet.

9. Kartendatenaktualisierungsverfahren nach Anspruch 7, wobei das Terminal, wenn ein den angeforderten Kartendaten entsprechender Bereich einen Aktualisierungszielbereich und einen Bereich, der kein Aktualisierungszielbereich ist, enthält, einen Teil der im Speicherteil für aktualisierte Daten gespeicherten aktualisierten Daten und einen Teil der in der Datenbank gespeicherten Kartendaten kombiniert, um auf die Kartendaten, deren Zugriff angefordert wird, zuzugreifen.

10. Kartendatenaktualisierungsverfahren nach Anspruch 7, wobei:
das Terminal ferner ein Überwachungsteil zum Extrahieren eines Betriebszustands des Terminals enthält, und
das Kartendatenaktualisierungsverfahren ferner einen Schritt enthält, in dem das Terminal, wenn der vom Überwachungsteil extrahierte Betriebszustand des Terminals angibt, dass eine Betriebsauslastung des Terminals gering ist, die Datenbank die im Speicherteil für aktualisierte Daten gespeicherten aktualisierten Daten wiedergeben läßt.

11. Kartendatenaktualisierungsverfahren nach Anspruch 7, wobei das Terminal auf die Anforderung zum Zugriff auf Kartendaten hin die in der Datenbank gespeicherten Kartendaten bereit stellt, bis die erzeugten aktualisierten Daten vollständig in das Speicherteil für aktualisierte Daten geschrieben sind.

12. Kartendatenaktualisierungsverfahren nach Anspruch 11, wobei das Terminal, wenn die erzeugten aktualisierten Daten vollständig in das Speicherteil für aktualisierte Daten geschrieben worden sind, bekannt gibt, dass die aktualisierten Kartendaten bereit zu stellen sind.

## Revendications

1. Système de distribution de données de carte comportant :
un serveur de distribution de données configuré pour distribuer des données de carte, et
un terminal configuré pour recevoir les données de carte,
le serveur de distribution de données incluant une base de données de données de différence configurée pour mémoriser, lorsque les données de carte sont mises à jour, des données de différence entre des données de carte avant la mise à jour et des données de carte mises à jour, pour chaque zone, et
le terminal incluant :
une base de données configurée pour mémoriser les données de carte distribuées depuis le serveur de distribution de carte, et
une partie de mémorisation de données mises à jour configurée pour mémoriser les données de carte mises à jour jusqu'à ce que les données de carte mises à jour apparaissent dans la base de données, dans lequel :
lorsqu'une demande pour des données de carte d'une zone cible mise à jour sont reçues en provenance du terminal, le serveur de distribution de données est configuré pour envoyer des données de différence pour la zone cible mise à jour depuis la base de données de données de différence au terminal,
le terminal est configuré pour générer des données mises à jour en appliquant les données de différence envoyées depuis le serveur de distribution de données aux données de carte mémorisées dans la base de données,
le terminal est configuré pour mémoriser les données mises à jour générées dans la partie de mémorisation de données mises à jour,
le terminal est configuré pour écrire les données mises à jour mémorisées dans la partie de mémorisation de données mises à jour, dans la base de données,
lorsque, au niveau du terminal, une demande pour extraire les données de carte est reçue en provenance d'une application qui utilise les données de carte alors que les données mises à jour mémorisées dans la partie de mémorisation de données mises à jour sont écrites dans la base de données, le terminal est configuré pour déterminer si les données de carte dont l'extraction est demandée ont été mémorisées dans la partie de mémorisation de données mises à jour,
lorsque les données de carte dont l'extraction est demandée ont été mémorisées dans la partie de mémorisation de données mises à jour, le terminal est configuré pour extraire les données de carte dont l'extraction est demandée de la partie de mémorisation de données mises à jour, et
lorsque les données de carte dont l'extraction est demandée n'ont pas été mémorisées dans la partie de mémorisation de données mises à jour, le terminal est configuré pour extraire les données de carte dont l'extraction est demandée de la base de données.

2. Système de distribution de données de carte selon la revendication 1, dans lequel :
une zone également à mettre à jour lorsque les données de carte de la zone cible mise à jour sont mises à jour est mémorisée dans la base de données de données de différence en tant que zone d'extension de mise à jour correspondant à la zone cible mise à jour, et
le serveur de distribution de données est configuré pour envoyer, au terminal, les données de différence pour la zone cible mise à jour et les données de différence pour la zone d'extension mise à jour correspondant à la zone cible mise à jour.

3. Système de distribution de données de carte selon la revendication 1, dans lequel, lorsque une zone correspondant aux données de carte dont l'extraction est demandée inclut une zone cible de mise à jour et une zone qui n'est pas une zone cible de mise à jour, le terminal est configuré pour combiner une partie des données mises à jour mémorisées dans la partie de mémorisation de données mises à jour et une partie des données de carte mémorisées dans la base de données pour extraire les données de carte dont l'extraction est demandée.

4. Système de distribution de données de carte selon la revendication 1, dans lequel :
le terminal comporte en outre une partie de surveillance pour extraire un état d'opération du terminal, et
lorsque l'état d'opération du terminal extrait par la partie de surveillance indique qu'une charge d'opération du terminal est faible, le terminal est configuré pour amener la base de données à refléter les données mises à jour mémorisées dans la partie de mémorisation de données mises à jour.

5. Système de distribution de données de carte selon la revendication 1, dans lequel le terminal est configuré pour fournir, en réponse à la demande d'extraction de données de carte, les données de carte mémorisées dans la base de données jusqu'à ce que les données mises à jour générées soient entièrement écrites dans la partie de mémorisation de données mises à jour.

6. Système de distribution de données de carte selon la revendication 5, dans lequel, lorsque les données mises à jour générées ont été entièrement écrites dans la partie de mémorisation de données mises à jour, le terminal est configuré pour notifier que les données de carte mises à jour doivent être délivrées.

7. Procédé de mise à jour de données de carte pour un système de distribution de données de carte incluant un serveur de distribution de données lequel distribue des données de carte et un terminal qui reçoit les données de carte, le procédé de mise à jour de données de carte mettant à jour les données de carte mémorisées dans le terminal,
le serveur de distribution de données incluant une base de données de données de différence pour mémoriser, lorsque les données de carte sont mises à jour, des données de différence entre des données de carte avant la mise à jour et des données de carte mises à jour, pour chaque zone, et
le terminal incluant :
une base de données pour mémoriser les données de carte distribuées depuis le serveur de distribution de carte, et
une partie de mémorisation de données mises à jour pour mémoriser les données de carte mises à jour jusqu'à ce que les données de carte mises à jour apparaissent dans la base de données,
le procédé de mise à jour de données de carte comportant les étapes suivantes :
lorsqu'une demande relative à des données de carte d'une zone cible mise à jour est reçue en provenance du terminal, le serveur de distribution de données envoie des données de différence pour la zone cible mise à jour depuis la base de données de données de différence au terminal,
le terminal générant des données mises à jour en appliquant les données de différence envoyées depuis le serveur de distribution de données aux données de carte mémorisées dans la base de données,
le terminal écrivant les données mises à jour générées dans la partie de mémorisation de données mises à jour,
le terminal écrivant les données mises à jour mémorisées dans la partie de mémorisation de données mises à jour, dans la base de données,
lorsqu'une demande pour extraire les données de carte est reçue en provenance d'une application qui utilise les données de carte alors que les données mises à jour mémorisées dans la partie de mémorisation de données mises à jour sont écrites dans la base de données, le terminal déterminant si les données de carte dont l'extraction est demandée ont été mémorisées dans la partie de mémorisation de données mises à jour,
lorsque les données de carte dont l'extraction est demandée ont été mémorisées dans la partie de mémorisation de données mises à jour, le terminal extrayant les données de carte dont l'extraction est demandée depuis la partie de mémorisation de données mises à jour, et
lorsque les données de carte dont l'extraction est demandée n'ont pas été mémorisées dans la partie de mémorisation de données mises à jour, le terminal extrayant les données de carte dont l'extraction est demandée depuis la base de données.

8. Procédé de mise à jour de données de carte selon la revendication 7, dans lequel :
le serveur de distribution de données mémorise, lors de la mémorisation des données de différence, une zone à mettre également à jour lorsque les données de carte de la zone cible mise à jour sont mises à jour, en tant que zone d'extension de mise à jour correspondant à la zone cible mise à jour, dans la base de données de données de différence, et
le serveur de distribution de données envoie, au terminal, les données de différence pour la zone cible mise à jour en et les données de différence pour la zone d'extension de mise à jour correspondant à la zone cible mise à jour.

9. Procédé de mise à jour de données de carte selon la revendication 7, dans lequel, lorsque une zone correspondant aux données de carte demandées inclut une zone cible de mise à jour et une zone qui n'est pas une zone cible de mise à jour, le terminal combine une partie des données mises à jour mémorisées dans la partie de mémorisation de données mises à jour et une partie des données de carte mémorisées dans la base de données pour extraire les données de carte dont l'extraction est demandée.

10. Procédé de mise à jour de données de carte selon la revendication 7, dans lequel :
le terminal inclut en outre une partie de surveillance pour extraire un état d'opération du terminal, et
le procédé de mise à jour de données de carte comporte en outre l'étape au cours de laquelle, lorsque l'état d'opération du terminal extrait par la partie de surveillance indique qu'une charge d'opération du terminal est faible, le terminal amène la base de données à refléter les données mises à jour mémorisées dans la partie de mémorisation de données mises à jour.

11. Procédé de mise à jour de données de carte selon la revendication 7, dans lequel le terminal fournit, en réponse à la demande d'extraction de données de carte, les données de carte mémorisées dans la base de données jusqu'à ce que les données mises à jour générées soient entièrement écrites dans la partie de mémorisation de données mises à jour.

12. Procédé de mise à jour de données de carte selon la revendication 11, dans lequel, lorsque les données mises à jour générées ont été entièrement écrites dans la partie de mémorisation de données mises à jour, le terminal notifie que les données de carte mises à jour doivent être fournies.
